# EUROPEAN PATENT SPECIFICATION

(11) **EP 0 757 828 B1**
(45) Date of publication and mention of the grant of the patent: **08.03.2000**
(21) Application number: 95917702.3
(22) Date of filing: 24.04.1995
(51) Int. Cl.: G07G 3/00, H04N 7/18, G08B 13/196

(54) **System for asynchronously recording digital data with respect to video data**
System zum asynchronen Aufzeichnen von Digitaldaten in bezug auf Videodaten
Système pour enregistrer en mode asynchrone des données numériques par rapport à des données vidéo

(30) Priority: 25.04.1994 US 232363
(43) Date of publication of application: 12.02.1997
(73) Proprietor: KATZ, Barry, Penllyn, PA 19422 (US)
(72) Inventor: KATZ, Barry, Penllyn, PA 19422 (US)
(74) Representative: Patentanwälte Westphal, Mussgnug & Partner
(86) International application number: PCT/US95/05167
(87) International publication number: WO 95/29470

(56) References cited:
- EP-A- 0 221 631
- WO-A-92/11614
- US-A- 4 237 483
- US-A- 4 991 008
- US-A- 4 994 916
- PATENT ABSTRACTS OF JAPAN vol. 011 no. 370 (P-642) ,3 December 1987 & JP,A,62 140272 (SONY CORP) 23 June 1987,
- PATENT ABSTRACTS OF JAPAN vol. 006 no. 032 (E-096) ,26 February 1982 & JP,A,56 149881 (MITSUBISHI ELECTRIC CORP) 19 November 1981,

## Description

### Field of the Invention

This invention relates to surveillance systems that record transaction events for review at a later date. More specifically, this invention relates to an asynchronous video event and transaction data multiplexing technique for such a surveillance system.

### Background of the Invention

The use of surveillance systems to record cash transactions for later review are well known in the art. For example, U.S. Patent No. 4,337,482, to Coutta, discloses a surveillance system that monitors and records transactions that occur at a number of cashier lanes. In Coutta, a single television camera, mounted on a rail, can be positioned to make a video recording of the transactions that occur at a single selected cashier lane. Coutta discloses that the digital transaction data from the cash register in the selected cashier lane is fed into a video character generator to provide a composite video picture in which an alphanumeric display of the transaction data overlays the video image of the transaction. Since a composite video image is generated with respect to only one cashier lane, it is usually possible to position the camers so that the alphanumeric overlay does not obscure a useful portion of the recorded video image. However, if a single camera is used to record the transactions that occur at a plurality of cashier lanes, it is likely that the alphanumeric overlay data will obscure an important part of the video image of at least one of the transaction lanes. This likelihood is further increased when a large number of parameters are displayed simultaneously for all of the cashier lanes.

A comparable video surveillance system is shown in the EP-A-0 221 631. To identify events on video data these data are overlaid by textdata and these overlaid video data are recorded as composite video data. Inherently this leads to corrupted video data. The composite video data are displayed to monitor the video data overlaid by the text data.

In U.S. Patent No. 4,630,110, to Cotton et al., a surveillance system is disclosed which monitors and records events from a single transaction lane by a plurality of video cameras. In one embodiment of Cotton et al., the video image from four cameras are combined, with two of the cameras being focused on the visual read-out of teh cash registers. In Cotton et al., the textual data can be displayed at the lower portion of the combined video picture.

Another surveillance system disclosed in U.S. Patent No. 4,145,715, to Clever, generates two levels of surveillance records. The first level, generated by a tape recorder, contains a record of all transactions. The second level generated on the tape recorder contains only selected transactions. In clever, transaction data, such as the price and department number, are input to a character generator.

The character generator output is mixed with the video image to create a composite video signal. This composite video signal consists of alphanumeric transaction data which overlays the transaction video image and is recorded by a video tape recorder onto a video tape.

Although Clever discloses that a single camera can be used to scan several point-of-sale (POS) terminals, the stored composite video signal on playback always contains alphanumeric transaction data that is permanently overlaid on the video image. Accordingly, upon playback of the composite video signal, a portion of the video image cannot be seen (i.e., the portion "under" the alphanumeric transaction data) and this portion can never be recovered. The alphanumeric overlay degrades the clarity of the resultant video images, especially if the transaction data is placed over the video image corresponding to the desired cashier lane (i.e., the cashier lane directly corresponding to the transaction data). Alternatively, a portion of the video may be "blacked out" so that the transaction data can be more easily read when viewed at a later time on the monitor. In this instance, the blacked out portion is recorded over a portion of the image being recorded by the television camera. Again, the portion of the video image which was blacked out is lost forever. These problems arise in the Clever system because the composite video signal is generated before recording on the video tape.

As the devices that perform data entry (cash registers, data terminals, optical character readers, radio frequency readers, magnetic media readers, etc.) become more sophisticated, larger quantities of alphanumeric characters describing the transaction are generated. The increase in information desired to be recorded for each lane would further tend to clutter and obscure the composite video image. Further, as the number of lanes being monitored increases, it becomes more difficult to overlay all of the alphanumeric transaction data at positions that will not obscure an important part of the video transaction image. Another factor to consider when recording the transaction data over the video images are the varying light and weather conditions when the transaction lanes are outdoors.

In U.S. Patent No. 5,216,502, to Katz, the transaction data and video pictures of the transaction behavior are recorded synchronously but separately on media capable of storing a full motion video.

The Katz patent (and for that matter all of the aforementioned patents) require that the transaction data be available at the time that the behavior is being recorded since the video images and the transaction data are recorded contemporaneously. However, there are certain applications where this technology cannot be applied. For example, in situations where the point-of-sale terminal buffers the transaction data until the termination of the transaction, or at the termination of several transactions. At the end of the transaction, the data is transmitted from the POS terminal to a host computer (i.e., the data is sent out in one burst instead of as a continuous stream). Accordingly, the transaction information cannot be recorded synchronously with the video images of the transaction.

### Summary of the Invention

It is an object of this invention to provide an improved surveillance system.

It is a further object to provide an asynchronous surveillance system.

A surveillance system for reviewing behavioral and transaction events which occur at one or more POS terminals, check outs, transaction lanes or operation stations is disclosed. The subject surveillance system includes means for generating video image signals, means for generating transaction signals, means for generating a synchronizing signal, means for associating the synchronizing signal with the video signal and the transaction signal, and a means for recording the video signal and transaction signal along with their associated synchronizing signals. The surveillance system also includes a means for recovering the recorded signals, means for utilizing the synchronizing signal to synchronize the video signal with its corresponding transaction signal, means for generating a composite video signal which consists of overlaying an alphanumeric representation of at least a portion of the transaction signal over its corresponding video signal, and means for displaying the composite video signal.

Light recordings of the behavioral events occurring at a POS terminal are made by a video or television camera, or any device that records light/images. The behavioral events include the customer's actions and the cashier's actions occurring at the POS terminals. The video camera senses the behavioral events and generates video signals corresponding to these events. A first recording device then records the video signal. This recording is preferably made in real time. Accordingly, a behavioral history at each transaction lane is made.

The first recording device is usually a video tape recorder or VCR. The video signals generated by the video camera are then stored on a video tape.

A sensor means at the transaction lane senses the transaction events occurring at the POS terminal and generates a transaction signal corresponding to the transaction events. The sensor means can be a cash register, a toll booth register, a machine that automatically receives money at toll plazas, a machine that can read a bar code printed on an item (bar code scanners), or any other point-of-sale device. The transaction events include the purchase of items or goods in a store, the payment of a toll, etc. A second recording device, preferably a host computer, connected to the sensor means, records the transaction signal and records it in a database. Accordingly, a transaction history of each terminal is made.

The transaction signals generated by the sensor means are usually in a digital format and are sometimes referred to as digital signals. The signals from the sensor means may include a variety of information besides the item name and cost. For example, the sensor signals may include any transaction lane identifier, time, date, camera identification and data source identification.

The second recording means stores the digital signals along with all other event or transaction data on a second recording medium. If the second recording device is a computer, the second recording medium is usually a floppy disk.

A means for generating a synchronizing signal is required. The synchronizing signal is usually a clock signal which can be generated by an independent clock or from the host computer's clock. The synchronizing signal can also be a transaction sequence number generated by the point-of-sale terminal or any other convenient signal which can be used as a reference. The synchronizing signal is then added to both the video signal and the transaction signal before they are recorded. Therefore, the video tape and the floppy disk contain the synchronizing signal which is used to match up the behavioral history with the corresponding transaction history.

Depending on the media used to store the video signals and the transaction signals, playback means are required to retrieve both signals along with the synchronizing information. If the first and second recording means use different storage media, two different playback means may be required. In the preferred embodiment a VCR is used to retrieve the video signals from the videotape and a computer is used to retrieve the transaction signal from the floppy disk.

A control and processing means (which can be the same computer used to retrieve the transaction signal) synchronizes the transaction signal from the second recording medium with the video signal from the first recording medium by comparing the synchronizing signals stored on both recording media. In this manner, the processing means is able to call up the transaction history corresponding to the exact behavioral history being played by the playback device. The processing means then generates a video overlay signal which includes data for an alphanumeric representation of the transaction signal. An overlay generator generates a composite video signal from the playback video signal and the video overlay signal. The composite video signal includes information representing an alphanumeric display of the transaction history overlayed on the corresponding behavioral history. A monitor is used to display the composite video signal.

The AVETDM surveillance system can be customized for a particular application. The control and processing means includes a means for setting parameters in response to an input signal from an operator. Some of the more common features allow the operator to select a desired POS terminal, to select all transactions involving credit cards, to select all transactons involving tractor trailers, to select all transactions in which the cashier took over five minutes to ring out a customer, to select all transactions in which a customer redeemed coupons, etc.

An alternate embodiment may use a single recording device to store both the video signals and the transaction signals onto a single recording medium. If the transaction signal is recorded on the same medium as the video signal, it should be stored separately so as not to degrade either the video signals or the transaction signals. For example, if the recording medium is a video tape, the transaction signal may be stored on the audio portion.

Another embodiment would store the transaction data on the video tape even though a separate recording means for the transaction signal is employed. Therefore, the transaction signal is recorded twice - once on the video tape and once on the floppy disk. This duplicate recording is required when the surveillance system is to be used as verifiable evidence in a judicial proceeding (e.g., to prove that a cashier was stealing). The presence of the transaction signal on the video tape is used as a sequential record to refute any charge that the transaction data on the floppy disk was altered. However, the AVETDM system does not normally use the transaction signal stored on the video tape.

### Brief Description of the Drawings These and other objects of the present invention and the

various features and details of the operation and construction thereof are hereinafter more fully set forth with reference to the accompanying drawings, where:
Fig. 1 is a schematic block diagram of a surveillance and transaction recording system in accordance with the instant invention.
Fig. 2 is a schematic block diagram of an alternative system for receiving time synchronization information for use in a surveillance system in accordance with the present invention.
Fig. 3 is a schematic block diagram of an alternative system for recording the behavioral events in accordance with the present invention.
Fig. 4 is a schematic block diagram of a system for recording transactions continuously for an extended period of time.
Fig. 5 is a schematic block diagram of an alternative system for recording transactions from a plurality of transaction lanes continuously for an extended period of time.
Fig. 6 is a schematic block diagram of the interface configuration.
Fig. 7 is a block diagram of an alternative configuration of the interface.
Fig. 8 is a block diagram of an alternative system for recording transactions for an extended period of time which may be used with the system shown in Fig. 3.
Fig. 9 is a block diagram of the instant invention using a common time source.
Fig. 10 is a block diagram of an alternative system using a common time source.
Fig. 11 is a block diagram of a second alternative system using a common time source.
Fig. 12 is a replay station used to review the transactions.
Fig. 13 is a schematic block diagram of a surveillance and transaction recording system for use with a multiple point-of-sale terminal in accordance with the present invention.

### Detailed Description of the Preferred Embodiment

Most point-of-sale systems utilize a plurality of cash registers which are all connected to a central processing means or host computer. The format used by manufacturers of cash registers and other data entry terminals for transmitting and storing transaction information is extremely diverse. Some systems transmit the transaction data to the host computer after every item is entered or "rung up". (These systems are sometimes referred to as "continuous stream systems.") Other point-of-sale systems store the transaction data in the cash registers until all items from one customer are entered and the transaction is consummated (i.e., after the total is determined), or after all items from several customers are entered. The transaction data representing the purchase of a number of items is then sent as one bundle or burst of information to the central processing means for permanent storage in a database. (These systems are sometimes referred to as "burst systems".)

Previous surveillance systems are well-adapted to record information from continuous stream systems. These previous surveillance systems would tap into the wires or bus connecting the cash register to the host computer, and record the transaction signal contemporaneously with the behavioral events recorded by a television camera. One of the more advanced surveillance systems of this type was disclosed in U.S. Application No. 07/629,255, filed December 18, 1990, which issued on June 1, 1993, as U.S. Patent No. 5,216,502. U.S. Patent 5,216,502 is incorporated by reference as if fully set forth herein. However, these previous surveillance systems can not be used for burst-type point-of-sale systems since the transaction signal is not generated until some time after the behavioral events are detected and recorded. During playback, the previous surveillance systems cannot synchronize the video signals with the later generated transaction signals.

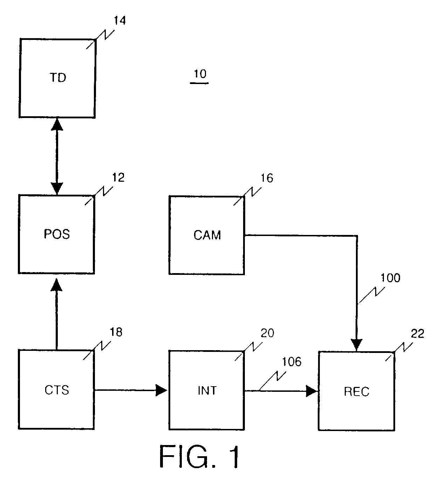

Fig. 1 is a block diagram of the preferred embodiment of the recording system of the Asynchronous Video Event and Transaction Data Multiplexing (AVETDM) surveillance/recording system in accordance with the present invention. The surveillance system can be used in different point-of-sale (POS) environments such as a retail environment (grocery stores, convenience stores, music/specialty stores, etc.), automotive vehicle toll booths employed at turnpikes, tunnels and bridges, and electronic guard tours. It is especially well suited for point-of-sale terminals which delay the transmission of the transaction information until the completion of a customer transaction or after several customer transactions.

The recording system of the present invention is generally indicated at 10. The transaction events (e.g., the purchase of goods) occur at a point-of-sale (POS) station or terminal 12. The POS terminal 12 can be an automatic teller machine, cash register, bar code scanner, toll booth or other system. As goods are recorded or rung up by the POS terminal 12, it temporarily stores the data in a buffer. At least the name and price of every item purchased by a customer is stored. At the end of the transaction, the transaction data is forwarded to transaction database means 14. The stored transaction data corresponds to a transaction history of the goods purchased. The transaction database means 14 can be a central processing unit or host computer with the transaction data stored on a magnetic medium (e.g., a floppy disk).

A camera 16 is positioned so that it can view the customer's and/or cashier's behavior at one or more POS terminals 12. The camera 16 generates a video signal which is stored on a recording means 22. The stored video signal corresponds to a behavioral history at the time the goods are purchased.

Since the transaction signal is generated and stored at a point in time after the video signal has been stored, the subject AVETDM surveillance system requires a synchronizing signal in order to align the transaction signal with its corresponding video signal upon playback. In the preferred embodiment, the synchronizing signal is generated by a common time source 18 which provides the synchronizing information for the transaction database 14 and an interface 20. The common time source 18 is preferably an independent clock, e.g., a clock synchronized with the atomic clock of the National Institute of Standards and Technology (NIST). The use of an independent clock allows maximum flexibility of the system. (Alternatively, as described later, the recording system 10 can use the clock of the POS system that is generated by the host computer 14.

The interface 20 receives the synchronizing signal from the common time source 18 and converts it to a form that can be recorded with the video signals generated by camera 16. The interface 20 may also add some static data to be recorded with the video signal to describe the store location, camera number/position, cashier's name/ID or other indicia.

Recording device 22 records the video signal from camera 16 and the coded data signals (including the synchronizing signal) from the interface 20. The recording device 22 may be a video cassette recorder, video disc, or a computer-based video capture system. The present system may have more than one recording device 22. Typically, one recorder 22 is required for each camera. However, some camera systems use video combining and multiplexing techniques to allow a single recording device 22 to record information from multiple cameras.

The recording device 22 records the information from the interface in such a manner as to preserve the entire video signal generated by camera 16. For instance, if the recording device 22 is a video cassette recorder, the video signals are stored on the video portion of the video tape, while the coded data signals from interface 20 may be recorded on the audio portion or frame intervals of the video tape.

Regardless of how the synchronizing signal is recorded by the recording device 22, it should be noted that the synchronizing signal is simultaneously or synchronously recorded on the video tape with the video signal. That is, the synchronizing signal is used as a permanent indexer or marker to indicate the exact storage location of the video signals. Therefore, if the cameras sense a cashier ringing up the sale of a loaf of bread at 11:29 am, the video signal corresponding to the cashier's behavioral action is recorded on the video tape along with the synchronizing signal representing 11:29 am. During playback, every time the synchronizing signal for 11:29 am is accessed, the video tape will display the cashier ringing up the sale of the loaf of bread. Similarly, the synchronizing signal is simultaneously stored with the transaction signal on the transaction database. During playback, every time the synchronizing signal for 11:29 am is accessed, the transaction database will call up the transaction signal corresponding to the description of the loaf of bread and the price. In this manner, the AVETDM system is able to synchronize the transaction events with the appropriate behavioral events during playback.

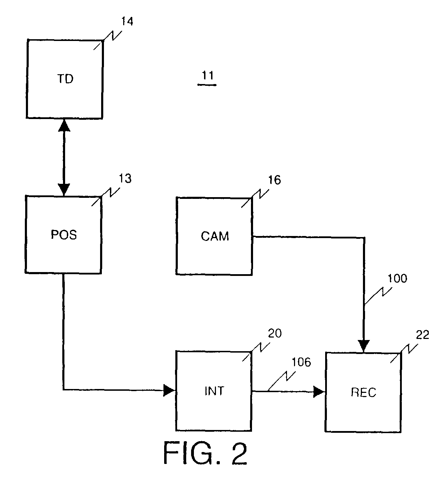

An alternative recording system 11 of the AVETDM system is shown in Fig. 2, in which like devices are similarly numbered. In Fig. 2, the point-of-sale terminal 13 generates its own synchronizing signal which is input into the interface 20 and the transaction database 14. In this embodiment, the synchronizing signal is a timing signal from an internal clock. Accordingly, an independent synchronizing signal generator is not required. However, other sequencing information generated by the POS terminal 13 may also be used (e.g., a transaction sequence number). Again, the POS generated synchronizing signal is used to synchronize the video or behavior information stored on recording device 22 with the transaction information stored on transaction database 14 during playback.

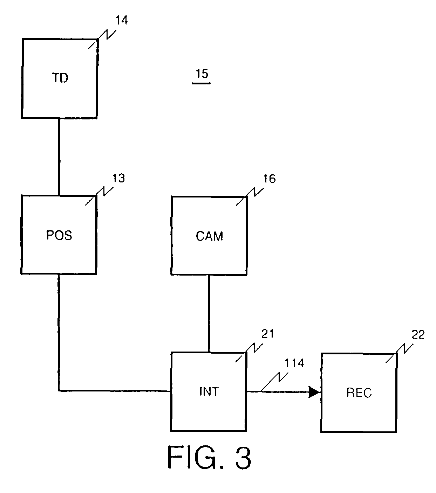

Referring now to Fig. 3, a second alternative recording system 15 is shown. Again, like elements are similarly numbered. In this embodiment, the interface 21 combines the video signal from camera 16 and the synchronizing data signal generated by the POS terminal 13 into a combined video/data signal. The recording device 22 records the combined video/data signal. It is preferable that the interface 21 combines the video and data information in such a manner that all of the information is preserved. If the recording device 22 is a VCR, the combined video/synchronizing signal is stored on the video portion of the video tape. The transaction database 14 stores all of the transaction data simultaneously with the synchronizing signal from POS terminal 13 in the manner described in the previous embodiments.

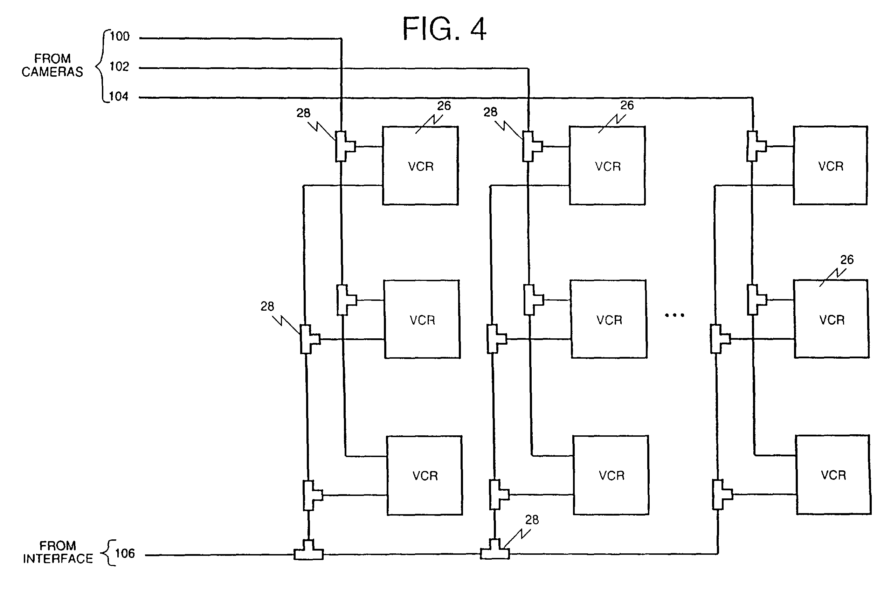

Referring now to Fig. 4, an embodiment is disclosed which allows twenty-four hour coverage of a plurality of POS stations for an extended period of time. Input lines 100, 102, 104... which carry the video signals from each camera are connected to a bank of recording devices 26 via splitters or T's 28. The splitters 28 divide the video signal from one camera to the recording devices. Timers associated with each recording device are programmed to turn on and off at appropriate times. In this situation, the recording device of choice is a VCR. Each VCR 26 can record eight hours of behavioral events occurring at a POS terminal. Therefore, a bank of three VCRs can provide twenty-four hour coverage for one camera.

The output line 106 from interface 20 transmits the synchronizing signal from the common time source 18. Splitters or T's 28 are used to input the synchronizing signal into an input channel of each VCR 26 from line 106. In the preferred embodiment, the input channel is an audio input of the VCR's. The embodiment disclosed in Fig. 4 can be used with the recording systems shown in Figs. 1 or 2.

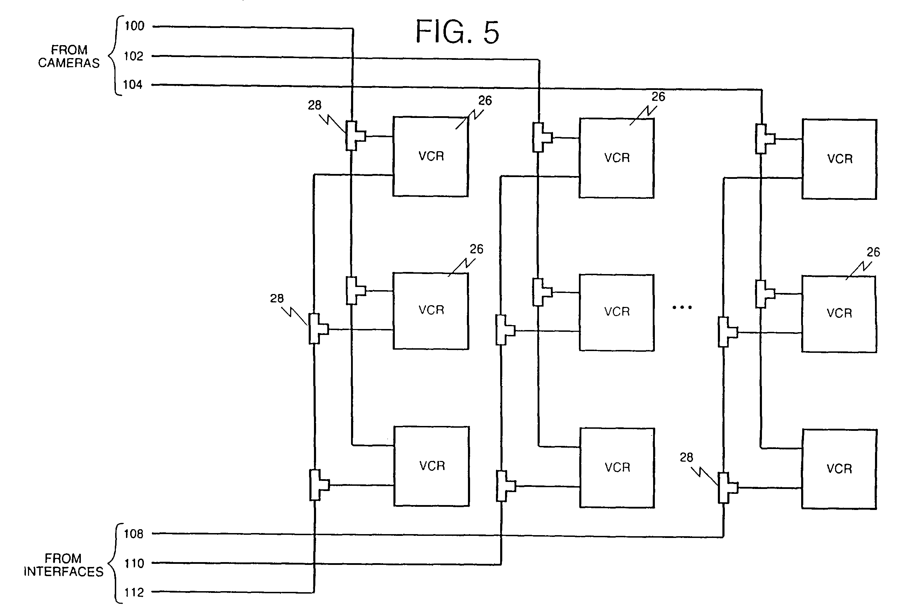

In Fig. 5, a schematic diagram of an alternative recording system that utilizes a plurality of interfaces is shown. The recording system of Fig. 5 may also be used with the recording systems of Figs. 1 or 2.

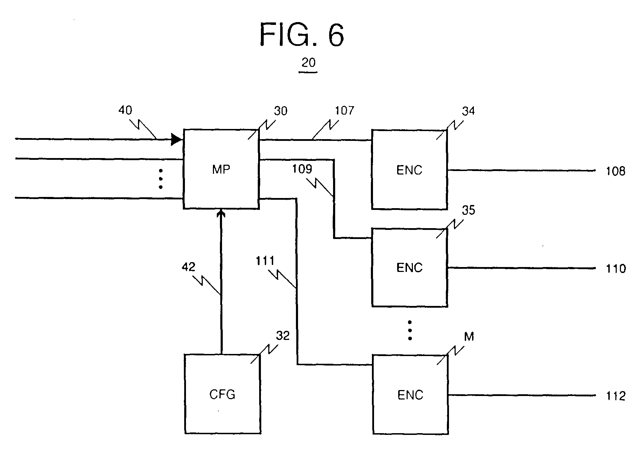

The preferred configuration of the interface 20 is shown in Fig. 6. A configuration terminal 32 or other controller means is connected to a microprocessor 30. The configuration terminal 32 allows an operator to check the status of the interface or to select certain parameters. The synchronizing data, e.g. timing information from a clock, enters the microprocessor 30 at input 40. The outputs 107, 109 and 111 of the microprocessor 30 are connected to various data encoders 34, 35...M which convert the synchronizing signal into a format compatible for recording on the recording means 22. The type of data encoders 34, 35 used depends on the recorder 22. For example, if the recorder 22 is a VCR, the data encoder may be a Data Based Security, Moorestown, N.J., model AM 90.

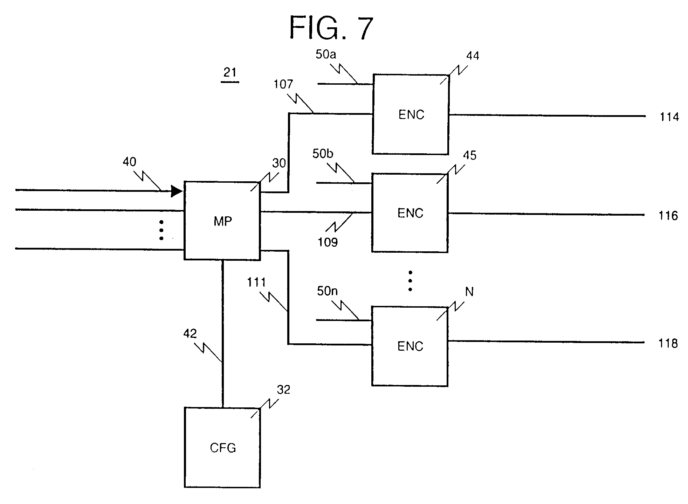

Fig. 7 shows an alternate interface circuit 21, which is used in connection with the recording system embodiment as shown in Fig. 3. Again, the configuration terminal or other controlling system 32 is connected to the microprocessor 30 via line 42. The raw data, including the synchronizing data, coming from the POS terminal 13 is input at 40 to the microprocessor 30. The outputs 107, 109 and 111 of the microprocessors 30 are connected to the encoders 44, 45....N. The video signal from the camera 16 is also input into the encoder at 50. The inputs may all be from one camera (in which case 50a, 50b and 50n are connected to the lone camera by splitters or T's) or alternatively each video input 50a, 50b...50n may be connected to its own camera 16a, 16b...16n. The encoders 44, 45...N produce an encoded combination signal of the video and data which is compatible for storing on the recording means 22. Again, this encoded information is generated in such a way that the entire data information and video information are not degraded. The outputs 114, 116 and 118 of the encoders are connected to the input of the recording device 22.

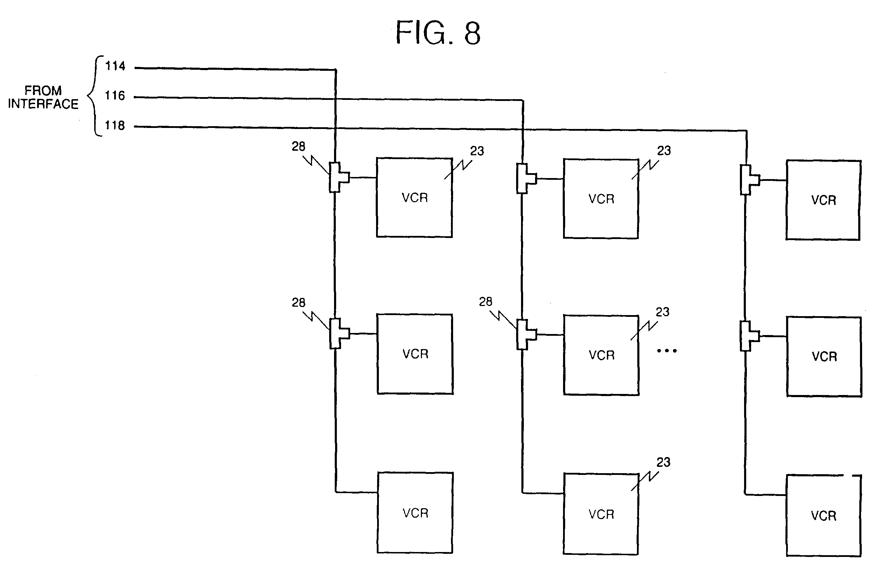

Fig. 8 shows an alternative embodiment which will allow an extended time coverage of the POS terminals for use with the system shown in Figs. 3 and 7. In this case, the behavior data generated by camera 16 is combined with the transaction data before recording on VCR 23. Splitters 28 direct the combined signal from the interface to each bank of VCRs.

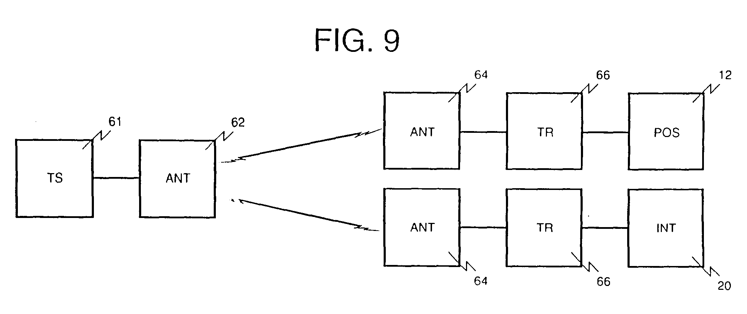

Referring now to Fig. 9, an independent time source, as may be used in the system of Fig. 1, is shown. In this example, the time source 61 is the atomic clock supported by the National Institute of Standards and Technology. The time source 61 generates a real time signal. The time source 61 is connected to a transmitting antenna 62, which transmits, via wireless technology, the time signal to receive antennas 64. Receiving antennas 64 amplify the received timing signal and forward the timing signal to a time receiving box 66. The time receiving boxes 66 condition the timing signal in manner that the POS terminal 12 and the interface 20 can better utilize the timing signal. A serial interface (not shown) may be used to connect the time receiving boxes to the POS terminal 12 and the interface 20. In this manner, the transaction database 14 and the recording mechanism 22 store the exact time simultaneously. Upon playback of the transaction data and the recording medium, the timing signal will be used to synchronize the transaction history with the behavioral history.

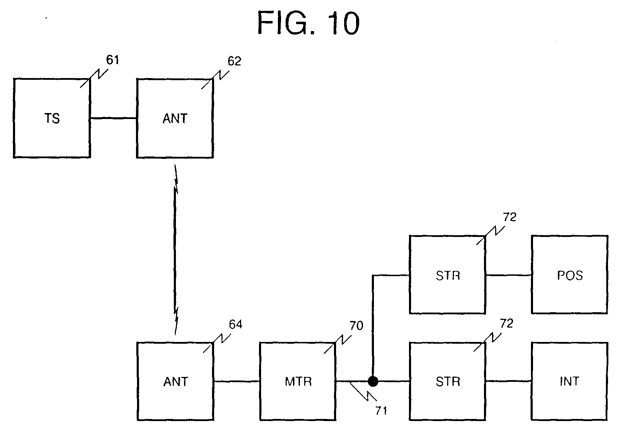

In Fig. 10, an alternative common time source is shown. In this system, a master time receiver 70 is connected to receive antenna 64. The output 71 of the master time receiver 70 is connected to a plurality of slave time receivers 72. The slave time receivers 72 are connected to the POS terminal 12 and the interface 20. Again, the transaction database 14 and the recording mechanism 22 simultaneously record the exact time with the transaction signals and the video signals, respectively, which is used to synchronize the data during playback.

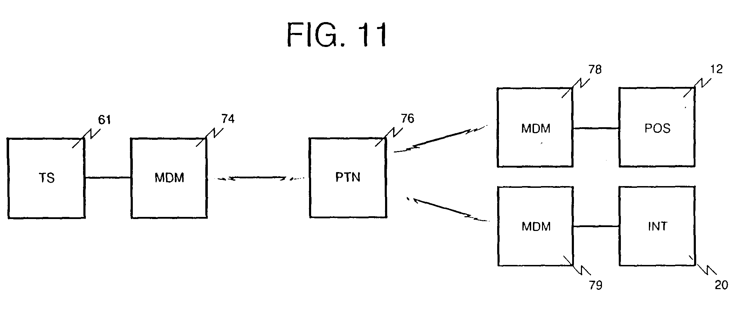

Fig. 11 is a second alternative common time source circuit. The time source 61 is connected to a modem 74. The modem 74 is connected in the usual manner via telephone lines to a public telephone network 76. The surveillance system also has modems 78 and 79 which are connected to the public telephone network 76. The modems 78 and 79 are connected to the POS station 12 and the interface 20 respectively.

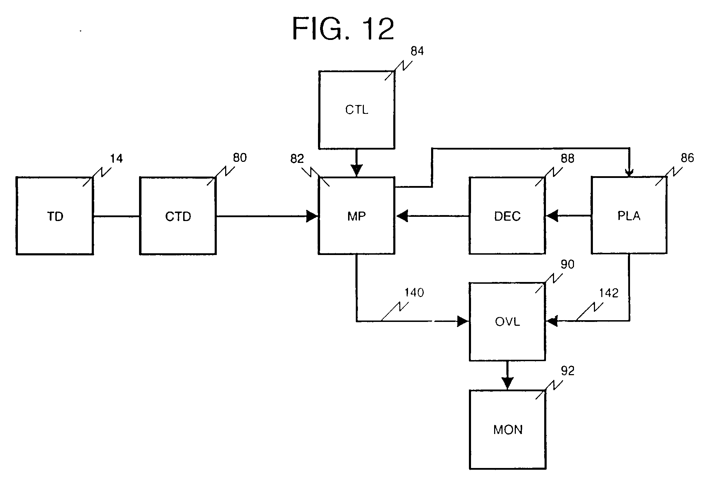

The AVETDM playback system is shown in Fig. 12. The transaction database 14 is connected to a compatible transaction database 80. Compatible transaction database 80 converts the transaction information and the synchronizing signal stored on the transaction database 14 during the recording period into a compatible format. The compatible transaction database 80 is connected to a microprocessor 82. The microprocessor controller 84 is directly connected to the microprocessor 82. In the preferred embodiment, the compatible transaction database 80, controller 84 and the microprocessor 82 are an off-the-shelf computer, for example, an IBM compatible 486 computer. In this case, the controller 84 would include the terminal and/or keyboard of the computer, and the transaction database 14 is a floppy disk, magnetic tape or other media which can be read by the computer.

The transaction signal and the synchronizing signal from the compatible transaction database 80 is downloaded into a memory or database of the microprocessor 82. This information is then accessed by the microprocessor 82 at the appropriate time. An alternative system (not shown) can have the microprocessor 82 controlling the transaction database 14 to download the data when needed.

An output of the microprocessor 82 is connected to a playback device 86. The playback device 86 must be compatible to the format used by the recording means 22 to record the video signal generated by the camera. For example, if the recording means 22 is a VCR, the playback means 86 is preferably a VCR also. An output of the playback mechanism 86 which can access the stored synchronizing signal (e.g., an audio output) is connected to a decoder 88. The decoder 88 decodes the synchronizing data from the playback device 86. An output of the decoder 88 is then connected to the microprocessor 82.

The stored video signal from camera 16 is reconstituted by the playback device 86 and input to the overlay control box 90 via line 142. The video signal contains the behavioral history which occurred at the POS station 12 (e.g., a person purchasing their groceries or a truck driver paying a toll). The microprocessor 82, using the synchronizing signal played back from both sources (i.e., the synchroning signal which was stored in the transaction database 14 and the synchroning signal stored by the recording device 22) synchronizes the behavioral/video information with the appropriate transaction data. The microprocessor 82 outputs a video overlay signal to an overlay control box 90 via line 140. The video overlay signal is an alphanumeric display of the transaction data corresponding to the exact behavioral events being played by playback means 86. The overlay control box 90 produces a composite video signal which includes the behavioral history being overlaid with an alphanumeric display of the corresponding transaction data. This composite signal is then displayed on monitor 92.

An operator at controller 84 decides which behavioral events stored by the recording device 22 and which transaction events stored on the transactional database 14 to view. To promote easy operation, the controller 84 may be menu driven.

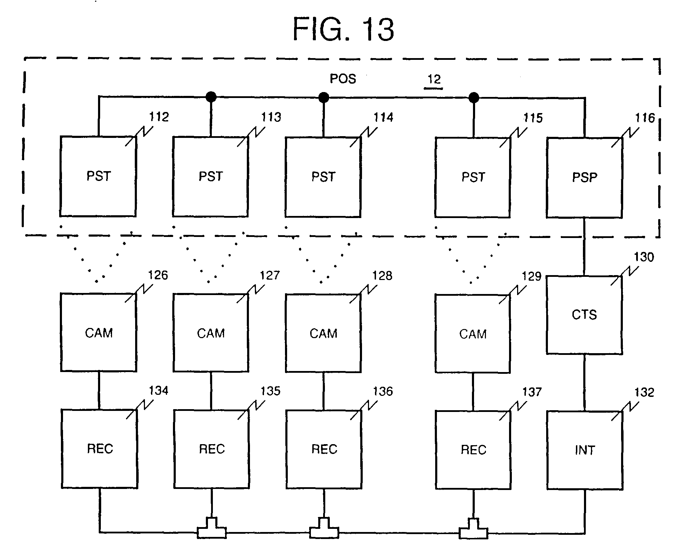

An example of the AVETDM system's operation will now be given. Referring now to Fig. 13, a surveillance system according to the present invention is shown that is designed for use with multiple cameras and multiple point-of-sale terminals, and is compatible with the system of Fig. 1. Each camera 126, 127, 128, 129,... is positioned to cover one cash register or point-of-sale terminal 112, 113, 114, 115,..., respectively.

The cameras sense the video images (behavioral events) as they transpire at each POS terminal. The images are converted into a video signal capable of being recorded by recorders 134, 135, 136. Each recorder simultaneously records the synchronizing signal from the common time source 130.

(In the preferred embodiment, the recorders 134, 135, 136...also record the transaction history from the POS host computer 116 along with any identifying indicia and the synchronizing signal. Although this step is not necessary, it is useful to have verifiable evidence for any future judicial proceedings. The transaction data is stored so as not to interfere with the recorded video signal. If the recorder is a VCR, the recording medium is a video tape. The transaction data can, for example, be stored on the video frame intervals or on the audio channel portion of the video tape. Therefore, the entire behavioral history and transaction history is recorded and may be accessed at a future date.)

All POS terminals are connected to a POS host computer 116. The POS terminals 112, 113, 114, 115... send transaction data to a POS host computer 116 in bursts when the final total is determined for each customer. For this example, the transaction data corresponding to each individual item or good rung up by the cash register is stored (e.g., in a buffer or in RAM) by each POS terminal until all items for that particular customer have been rung up. That is, after the cashier pushes the tender or total key on the cash register, the POS terminal sends a transaction signal corresponding to the transaction history to the POS host computer 116.

The POS host computer generates a database for each POS terminal containing the transaction data, any identifying indicia and the synchronizing signal from the common time source 130. The POS host computer 116 stores this database on a permanent media (magnetic tape, CD ROM, floppy disks, etc.). The information stored on the floppy disks forms the transaction database 14 of Fig. 1.

The interface 132 operates in a similar manner as the interface described in Figs. 1 and 6. Similarly, the recorders 134, 135, 136... also operate in a similar manner as the recorder 22 described in Fig. 1.

During playback, the operator may desire to view the events at a particular POS terminal, e.g. POS terminal 113. The operator inputs this information into the controller 84. The microprocessor 82 controls the playback device 86 to output the video signals corresponding to POS terminal 113. Normally, all of the transaction data for all POS terminals (including the synchronizing signal and identifying indicia) is downloaded into a buffer of the microprocessor 82 from the transaction database 14 or floppy disk. By matching the synchronizing signals from the playback device 86 with the synchronizing signals stored in the buffer, the microprocessor recalls the exact transaction signal which corresponds to the behavior events at POS terminal 113 at the precise point in time at which the video signals were stored on the video tape. The microprocessor then generates a video outlay signal corresponding to an alphanumeric display of the desired transaction data of POS terminal 113. The overlay control box 90 then overlays the video outlay signal over the corresponding video signal from playback device 86, generating a composite video signal. The operator sees the behavioral events of POS terminal 113 and the corresponding transaction history overlayed on the video.

The microprocessor has both synchronizing signals, which were stored during the recording session (see Fig. 1), available to process. That is the synchronizing data stored by the transaction database 14, and the synchronizing data stored on the video tape by the recording mechanism 22 are both input to the microprocessor 82. Therefore, during playback the microprocessor 82 is able to match or synchronize the behavioral events (video information) with the later stored transaction events.

Since the microprocessor 82 has available to it all of the transaction data recorded onto the transaction database 14, it is possible for the operator to look into the "future". For example, the operator may wish to look at all transactions at POS terminal 113 in which a customer uses a credit card. The operator can direct the microprocessor 82 to look for identifying indicia corresponding to credit card sales. Therefore, while the playback device 86 is showing behavioral events taking place at the "present" time, the microprocessor 82 can inform the operator that a credit card transaction will take place in twelve minutes and thirty-one seconds (or alternatively, the eighth customer from now will use a credit card).

It should be noted that the transaction data may also be stored with the video images. The surveillance system allows the operator to freeze the alphanumeric transaction data display in the overlay while the video tape is rewound to the beginning of the transaction. The operator can then review the behavioral events while looking at the transaction data in the overlay.

Line markers are provided on the overlay to enable the user to move a pointer on the overlay to each item as it is registered by the cashier in the picture. The system encodes the next transaction serial number on the sound track of the video tape at the end of each transaction. Alternatively, an independent clock can be used to synchronize the data stored on video tape with the data stored in the second medium. The user can use the serial number to be certain that the transaction behavior that he is seeing corresponds to the transaction data in the data overlay.

Another common use of the AVETDM surveillance system is at toll booths. In certain toll systems, the toll transaction data is stored in a lane controller. The transaction signal may be generated by a toll terminal, card reader, loop detector, treadle, indicator light, etc. located at each toll lane. After the data is stored in the lane controller, it is sent to the plaza controller at irregular intervals. Several transactions take place between data transmissions. For example, five vehicles may have to exit the lane before a transaction is transmitted to the host computer. If several transactions occur before the data is transmitted, there is no method of synchronizing the transaction data with the video images other then a data freeze or data pause method. However, the data pause method is not acceptable to toll authorities, since it requires too much time to review tapes and does not work well with automated tape editing. The solution is to develop circuitry which inputs synchronizing data, encodes it, and stores it along with the video signal. The synchronizing data may be stored on the video tape's sound track, the video tape's vertical interval or within the visible video. The transaction data is stored asynchronously from the behavioral events. However, the transaction data is also stored with the synchronizing signal in a manner that supports synchronizing or resynchronizing the recorded behavior with the transaction data upon playback.

The AVETDM computer encodes the video tape with identifying indicia, including facility name/number, camera identification, date and time messages. The time messages can be inserted every 100 milliseconds. The AVETDM simultaneously captures the transaction data from the lane controller. These messages include several transactions. Each transaction includes time messages for that transaction. Each transaction message can be stored in a file with the date, lane, terminal identification, etc., and the time.

The file will contain a list of messages indexed by date, time, lane, etc. Upon replay,the user selects the target lane. When the video tape is replayed, the AVETDM inputs the data and time messages. The AVETDM requires the time messages from the tape and looks up the messages in a data file on the disk for that time and target lane. The AVETDM then displays the messages from the targeted lane and the data overlay. In one embodiment, the lane controller stores three transactions and forwards all three at the end of the third transaction to a host computer.

A camera is placed at the toll plaza to view four to six lanes from the exit side. A video tape recorder, for example a VHS video cassette recorder, is connected to each camera. The AVETDM computer is connected to the lane controller communication so that the AVETDM computer receives all of the data messages that are communicated between the lane controller and the plaza computer. The VHS tape is encoded with data messages that identify the plaza and the date. Time messages are encoded every 100 milliseconds. The plaza number, lane number, date and time are stored to the host computer's disk for every transaction message.

When the video tape is replayed, the operator indicates which lane is to be targeted for data to be displayed in the overlay. When a tape is replayed, the time, date, plaza i.d., etc. are recorded on the sound track of the video and are read into the microprocessor 82. The microprocessor 82 reads the time and searches the data file for messages that have the targeted lane identifier and the matching time and date. When the messages are located, they are formatted and displayed in the data overlay. The time of the behavior in the picture now matches the display in the overlay.

Another situation where the AVETDM is necessary is where the POS system data is held until the end of the day or until the POS is closed. Either way, the transaction data is not available in real time. Consider a POS system that holds each transaction inside the POS terminal, and a host collects the held data only after the POS terminal is closed. The data is then stored in the POS system main processor and is made available to the AVETDM via a set of magnetic disks. Time synchronization between the POS system and the AVETDM is achieved by a direct serial link between the POS system main processor and the AVETDM.

The AVETDM will record the video images (behavioral events) of the POS terminal activities but will not be able to record any real time transaction data, as it has not yet left the temporary storage in the POS terminal. Instead the AVETDM records time and identity codes (synchronizing indicia) on the video tape which can be retrieved during playback. These codes will be used to synchronize the transaction and event data received from the POS system with the video images of the POS terminal. Messages coded on the video tape can take the following form:
TIM yyyymmdd hhmmss zz〈EOM〉
IDN aaaaaa bbbbbb cccccc zz〈EOM〉
where,
TIM is the message header for the time message
IDN is the message header for the identity message
yyyymmdd is the date, with yyyy being the year, mm the month, and dd the day
hhmmss is the time, with hh being the hours, mm the minutes, and ss the seconds
zz is the message checksum
〈EOM〉 is the end of message character, which in this case is a line feed (OxOB)
aaaaaa is the customer identity code
bbbbbb is the site identity code
cccccc is an identity code used to identify different systems within a site

The serial interface between the POS system main processor and the AVETDM uses the same time message format that is encoded on the tape. This message originates from the POS system main processor on a frequent periodic basis. For example, many systems make the time and date available when the receipt is printed. The AVETDM receives the message, verifies the checksum, and makes any necessary adjustments to its internal clock. The AVETDM internal clock will thus be synchronized with the POS system clock. The AVETDM will use its internal clock to generate the time messages that are encoded on the tape.

The transaction and event data files consist of individual records detailing each transaction or event. Each of these records must contain a time stamp to allow them to be synchronized with the video stamp and therefore to be synchronized with the video tape. The playback system reads the data file before the tape begins to play. It extracts time data and other identifiers from the message and compares these with the information initially received from the tape as it begins to play. This information will verify that the tape is in fact the one recorded for this particular data. As the tape plays the operator is given details on each transaction at the appropriate time.

The entire transaction data can be loaded into memory before the behavioral recording is replayed. The stored transaction data can then be manipulated by the computer to provide summaries, averages, counts, statistics, anomalies or exceptions. The desired information or anomalies can then be inserted during the replay of the behavioral transaction at the relevant times or sequences. The system can "look into the future" and display a warning message to the operator that a particular anomaly or transaction will occur in X number of frames or in X number of minutes. A control program can be customized to each user to look for particular events and to support this level of operation, thereby allowing the operator to see transaction data derived from past, present and future behavioral events while viewing the "present" provided by the video tape replay.

An added benefit of the AVETDM system is that because the data is known in advance, the system can warn the operator before items of interest appear on the tape. The general format of the transaction and event data records is as follows:
TRN yyyymmdd hhmmss tttttttttt....tttt zz〈NL〉

The specific details of the transaction record such as type of sale, amount, specific details about the items purchased, etc... are not important to the description of the AVETDM system and are simply represented as a series of t's above. The AVETDM will process these specific details in order to extract the information that is to be displayed to the AVETDM system operator.

The transaction record must contain a means for synchronizing the transaction data with the behavioral events recorded on the video tape. The preferred method is to time stamp the transaction data and the recorded behavioral events which allows video and data synchronization. However, other methods of synchronizing may be used. For example, pictorial or graphic recordings may be used. The transaction data system buffers some number of transactions before transmitting to a host computer. If four transactions are buffered, the first transaction is transmitted from the local buffer when the fifth transaction is consummated, the second transaction is sent after the sixth transaction is consummated and so forth. In these instances, the AVETDM can receive the signal that a transaction is being sent and can mark the tape with sequence codes. When the data for the first transaction is sent, the code written on the behavioral recording matches the behavior that coincides with the fifth transaction and so on.

Additional identification details (such as store and customer) might be contained in each transaction record or might appear in a special file identity and description block at the beginning of the file. Either way the correlation between the file and tape can easily be verified.

Another typical situation where the AVETDM is necessary is one where the POS system data is not available in real time, but is available at a slightly later time.

Consider a POS system which does not have its own internal clock or does not produce appropriate synchronizing indicia. Again, this example will use a POS system which holds each transaction inside the POS terminal, and collects the held data only after the POS terminal is closed, e.g., at the end of the day. The data is then stored in the POS system host computer and is made available to the AVETDM via a set of magnetic disks. Time synchronization between the POS system and the AVETDM is achieved via a time signal receiver. Both the POS system and the AVETDM will connect to time receivers that receive a broadcast time synchronization signal such as the one transmitted by the NIST on WWV and WWVH. (See, for example, Figs. 9, 10 and 11.)

The AVETDM will record the video images of the POS terminal activities but will not be able to record any real time event and transaction data, as it has not yet left the temporary storage in the POS terminal. Instead the AVETDM records time and identity codes on the video tape that can be retrieved from the POS system with the video images of the POS terminal. Messages coded on the video tape can take the following form:
TIM yyyymmdd hhmmss zz〈EOM〉
IDN aaaaaa bbbbbb cccccc zz〈EOM〉
where,
TIM is the message header for the time message
IDN is the message header for the identity message
yyyymmdd is the date, with yyyy being the year, mm the month, and dd the day
hhmmss is the time, with hh being the hours, mm the minutes, and ss the seconds
zz is the message checksum
〈EOM〉 is the end of message character, which in this case is a line feed (OxOB)
aaaaaa is the customer identity code
bbbbbb is the site identity code
cccccc is an identity code used to identify different systems within a site

The serial interfaces with the time signal receiver use the same time message format that is encoded on the tape. This message originates from the time signal receiver on a frequent periodic basis. The AVETDM and POS system receive the message, verify the checksum, and make any necessary adjustments to their internal clocks. The AVETDM internal clock will synchronized with the POS system clock. The AVETDM will use its internal clock to generate the time messages that are encoded on the tape an the POS system will use its clock to time stamp all transaction and event records.

The transaction and event data files consist of individual records detailing each transaction or event. Each of these records must contain a time stamp to allow time to be synchronized with the video tape. The playback system reads the data file before the tape begins to play. It extracts time data and other identifiers from the message and compares these with the information initially received from the tape.

This information will verify that the tape is in fact the one recorded for this particular data. As the tape plays the operator is given details on each transaction at the appropriate time.

## Claims

1. A surveillance system which asynchronously records digital data with respect to video data, comprising:
a) light sensing means (16, 126, 127,128, 129) for generating video signals of behavioral events corresponding to a transaction at an operation station (12, 13, 112, 113, 114, 115);
b) sensor means at the operation station for generating digital signals representing transaction events;
c) means for generating synchronizing signals (13, 18, 130);
d) first recording means (22, 23, 26, 134, 135, 136, 137) for storing the video signals and the synchronizing signals;
e) second recording means (22, 23, 26, 134, 1345, 136, 137) for storing the digital signals and the synchronizing signals;
f) first playback means (86) for retrieving the video signals and synchronizing signals stored on the first recording means (22, 23, 26, 134, 135, 136, 137);
g) second playback means (86) for retrieving the digital signals and synchronizing signals stored on the second recording means (22, 23, 26, 134, 135, 136, 137); using the synchronizing signals to synchronize the video signal with the digital signals;
h) control means (20, 21, 82, 132), responsive to an input signal, for generating a composite video signal, the composite video signal including signals representing alphanumeric displays corresponding to desired transaction events, said alpha-numeric displays being overlaid on the video signal of the desired behavioral events; wherein the control means (20, 21, 82, 132) utilizes the synchronizing signals to retrieve the desired behavioral events and transaction events; and
i) a monitor (92) for displaying the composite video signal.

2. The surveillance system of claim 1 wherein the sensor means is a cash register.

3. The surveillance system of claim 1 wherein the means for generating synchronizing signals (13, 18, 130) is a clock which can receive signals from an independent source (61).

4. The surveillance system of claim 1 wherein the first recording means (22, 23, 26, 134, 135, 136, 137) is a video cassette recorder.

5. The surveillance system of claim 4 wherein the playback means (86) is a video cassette recorder.

6. The surveillance system of claim 1 wherein the second recording (22, 23, 26, 134, 135, 136, 137) means is a first computer and the information is stored on a magnetic medium.

7. The surveillance system of claim 6 wherein the second recording means (22, 23, 26, 134, 135, 136, 137) is a second computer.

8. The surveillance system of claim 1 wherein the control means (82) is a second computer.

9. The surveillance system of claim 1 wherein the first recording means (22, 23, 26, 134, 135, 136, 137) is a video disc.

10. The surveillance system of claim 1 wherein the second recording means (22, 23, 26, 134, 135, 136, 137) is a computer and the information is stored on a compact disc.

11. The surveillance system of claim 1 further comprising computer means associated with the control means for manipulating, calculating, sorting and filtering the stored digital transaction data for generating statistics and prompting for events that will be viewed on the replay behavioral record.

12. The surveillance system of claim 11 wherein the synchronizing signals are signals corresponding to the time elapsing when the recordings where made.

13. The surveillance system of claim 11 wherein the light sensing means (16, 126, 127, 128, 129) is a television camera.

14. The surveillance system of claim 13 wherein the first recording means (22, 23, 26, 134, 135, 136, 137) is a video cassette recorder.

15. The surveillance system of claim 11 wherein the synchronizing signals are sequence signals.

16. A method of asynchronously recording events including a video record and a transactional record, comprising the steps:
a) generating frames of video signals corresponding to the behavioral events at an operation station;
b) generating digital signals at the operation station for representing transaction events;
c) generating synchronizing signals;
d) storing the video signals and synchronizing signals on a first medium;
e) storing the digital signals and the synchronizing signals on a second medium;
f) retrieving the stored video signals, the stored digital signals and the corresponding stored synchronizing signals;
g) synchronizing the video signals with the digital signals using the retrieved synchronizing signals;
h) generating a composite video signal, the composite video signal including signals representing alphanumeric displays corresponding to desired transaction events, said alphanumeric displays being overlaid on the video signal of the desired behavioral events; and
i) displaying the composite video signal.

## Patentansprüche

1. Überwachungssystem, welches asynchron Digitaldaten in bezug auf Videodaten aufzeichnet und das aufweist:
a) ein Lichterfassungsmittel (16, 126, 127, 128, 129) zum Erzeugen von Videosignalen von Verhaltensereignissen, die in Bezug stehen zu einer Transaktion an einer Bedienstation (12, 13, 112, 113, 114, 115);
b) ein Sensormittel an der Bedienstation zum Erzeugen von Digitalsignalen, die die Transaktionsereignisse repräsentieren;
c) ein Mittel zum Erzeugen von Synchronisierungssignalen (13, 18, 130);
d) ein erstes Aufzeichnungsmittel (22, 23, 26, 134, 135, 136, 137) zum Speichern der Videosignale und der Synchronisierungssignale;
e) ein zweites Aufzeichnungsmittel (22, 23, 26, 134, 135, 136, 137) zum Speichern der Digitalsignale und der Synchronisierungssignale;
f) ein erstes Wiedergabemittel (86) zum Abrufen der in dem ersten Aufzeichnungsmittel (22, 23, 26, 134, 135, 136, 137) gespeicherten Videosignale und Synchronisierungssignale;
g) ein zweites Wiedergabemittel (86) zum Abrufen der in dem zweiten Aufzeichnungsmittel (22, 23, 26, 134, 135, 136, 137) gespeicherten Digitalsignale und Synchronisierungssignale; Verwenden der Synchronisierungssignale, um das Videosignal mit den Digitalsignalen zu synchronisieren;
h) ein Steuermittel (20, 21, 82, 132), das auf ein Eingangssignal reagiert, zum Erzeugen eines zusammengesetzten Videosignals, wobei das zusammengesetzte Videosignal Signale umfaßt, die alphanumerische Anzeigen repräsentieren, die zu den gewünschten Transaktionsereignissen gehören, wobei die alpha-numerischen Anzeigen auf dem Videosignal von den gewünschten Verhaltensereignissen überlagert sind; wobei das Steuermittel (20, 21, 82, 132) das Synchronisierungssignal verwendet, um die gewünschten Verhaltensereignisse und Transaktionsereignisse abzurufen; und
i) einen Monitor (92) zum Anzeigen des zusammengesetzten Videosignals.

2. Überwachungssystem nach Anspruch 1, bei dem das Sensormittel eine Registrierkasse ist.

3. Überwachungssystem nach Anspruch 1, bei dem das Mittel zum Erzeugen von Synchronisierungssignalen (13, 18, 130) ein Taktgeber ist, welcher Signale von einer unabhängigen Quelle (61) empfangen kann.

4. Überwachungssystem nach Anspruch 1, bei dem das erste Aufzeichnungsmittel (22, 23, 26, 134, 135, 136, 137) ein Videorecorder ist.

5. Überwachungssystem nach Anspruch 1, bei dem das Wiedergabemittel (86) ein Videorecorder ist.

6. Überwachungssystem nach Anspruch 1, bei dem das zweite Aufzeichnungsmittel (22, 23, 26, 134, 135, 136, 137) ein erster Computer ist und bei dem die Information auf einem magnetischen Medium gespeichert wird.

7. Überwachungssystem nach Anspruch 6, bei dem das zweite Aufzeichnungsmittel (22, 23, 26, 134, 135, 136, 137) ein zweiter Computer ist.

8. Überwachungssystem nach Anspruch 1, bei dem das Steuermittel (82) ein zweiter Computer ist.

9. Überwachungssystem nach Anspruch 1, bei dem das erste Aufzeichnungsmittel (22, 23, 26, 134, 135, 136, 137) eine Video-Disk ist.

10. Überwachungssystem nach Anspruch 1, bei dem das zweite Aufzeichnungsmittel (22, 23, 26, 134, 135, 136, 137) ein Computer ist und bei dem die Information auf einer Kompakt-Disk gespeichert wird.

11. Überwachungssystem nach Anspruch 1, das weiterhin ein zu dem Steuermittel gehöriges Computermittel aufweist zum Bearbeiten, Berechnen, Sortieren und Filtern der gespeicherten Transaktionsdaten zum Erzeugen von Statistiken und Anzeigen von Ereignissen, die anhand der Wiedergabe der Verhaltensaufzeichnung betrachtet werden können.

12. Überwachungssystem nach Anspruch 11, bei dem die Synchronisierungssignale Signale sind, die mit der verstreichenden Zeit, zu der die Aufnahmen gemacht wurden, korrespondieren.

13. Überwachungssystem nach Anspruch 11, bei dem das Lichterfassungsmittel (16, 126, 127, 128, 129) eine Fernsehkamera ist.

14. Überwachungssystem nach Anspruch 13, bei dem das erste Aufzeichnungsmittel (22, 23, 26, 134, 135, 136, 137) ein Videorecorder ist.

15. Überwachungssystem nach Anspruch 11, bei dem die Synchronisierungssignale Sequenzsignale sind.

16. Verfahren zum asynchronen Aufzeichnen von Ereignissen, das eine Videoaufzeichnung und eine Transaktionsaufzeichnung umfaßt und das die Schritte aufweist:
a) Erzeugen von Videosignalen, die zu Verhaltensereignissen an einer Bedienstation gehören;
b) Erzeugen von Digitalsignalen an der Bedienstation zum Repräsentieren von Transaktionsereignissen;
c) Erzeugen von Synchronisierungssignalen;
d) Speichern der Videosignale und der Synchronisierungssignale auf einem ersten Medium;
e) Speichern der Digitalsignale und der Synchronisierungssignale auf einem zweiten Medium;
f) Abrufen der gespeicherten Videosignale, der gespeicherten Digitalsignale und der zugehörigen gespeicherten Synchronisierungssignale;
g) Synchronisieren der Videosignale mit den Digitalsignalen unter Verwendung der abgerufenen Synchronisierungssignale;
h) Erzeugen eines zusammengesetzten Videosignals, wobei das zusammengesetzte Videosignal Signale umfaßt, die alphanumerische Anzeigen, welche zu gewünschten Transaktionsereignissen gehören, repräsentieren, wobei die alphanumerischen Anzeigen auf dem Videosignal von den gewünschten Verhaltensereignissen überlagert sind; und
i) Anzeigen des zusammengesetzten Videosignals.

## Revendications

1. Système de surveillance qui enregistre de manière asynchrone des données numériques concernant des données vidéo, comprenant :
a) un moyen d'exploration de lumière (16, 126, 127, 128, 129) pour générer des signaux vidéo relatifs à des événements de fonctionnement qui correspondent à une transaction dans un poste d'opérations (12, 13, 112, 113, 114, 115) ;
b) un moyen de détecteur dans le poste d'opérations pour générer des signaux numériques représentant des événements de transaction ;
c) un moyen pour générer des signaux de synchronisation (13, 18, 130) ;
d) un premier moyen d'enregistrement (22, 23, 26, 134, 135, 136, 137) pour stocker les signaux vidéo et les signaux de synchronisation ;
e) un second moyen d'enregistrement (22, 23, 26, 134, 135, 136, 137) pour stocker les signaux numériques et les signaux de synchronisation ;
f) un premier moyen de lecture (86) pour restituer les signaux vidéo et les signaux de synchronisation stockés sur le premier moyen d'enregistrement (22, 23, 26, 134, 135, 136, 137) ;
g) un second moyen de lecture (86) pour restituer les signaux sur le second moyen d'enregistrement (22, 23, 26, 134, 135, 136, 137), en utilisant les signaux de synchronisation pour synchroniser les signaux vidéo avec les signaux numériques ;
h) un moyen de commande (20, 21, 82, 132) répondant à un signal d'entrée pour générer un signal vidéo composite, ce signal vidéo composite incluant des signaux représentant des affichages alphanumériques correspondant à des événements de transaction voulus, ces affichages alpha-numériques étant superposés sur le signal vidéo des événements de fonctionnement voulus ; le moyen de commande (20, 21, 82, 132) utilisant les signaux de synchronisation pour restituer les événements de fonctionnement et les événements de transaction voulus ; et
i) un moniteur (92) pour afficher le signal vidéo composite.

2. Système de surveillance selon la revendication 1,
dans lequel
le moyen de détecteur est une caisse enregistreuse.

3. Système de surveillance selon la revendication 1,
dans lequel
le moyen de génération de signaux de synchronisation (13, 18, 130) est une horloge qui peut recevoir des signaux provenant d'une source indépendante (61).

4. Système de surveillance selon la revendication 1,
dans lequel
le premier moyen d'enregistrement (22, 23, 26, 134, 135, 136, 137) est un magnétoscope.

5. Système de surveillance selon la revendication 4,
dans lequel
le moyen de lecture (86) est un magnétoscope.

6. Système de surveillance selon la revendication 1,
dans lequel
le second moyen d'enregistrement (22, 23, 26, 134, 135, 136, 137) est un premier ordinateur, et l'information est stockée sur un support magnétique.

7. Système de surveillance selon la revendication 6,
dans lequel
le second moyen d'enregistrement (22, 23, 26, 134, 135, 136, 137) est un second ordinateur.

8. Système de surveillance selon la revendication 1,
dans lequel
le moyen de commande (82) est un second ordinateur.

9. Système de surveillance selon la revendication 1,
dans lequel
le premier moyen d'enregistrement (22, 23, 26, 134, 135, 136, 137) est un vidéodisque.

10. Système de surveillance selon la revendication 1,
dans lequel
le second moyen d'enregistrement (22, 23, 26, 134, 135, 136, 137) est un ordinateur et l'information est stockée sur un disque compact.

11. Système de surveillance selon la revendication 1,
comprenant en outre
un moyen d'ordinateur associé au second moyen de commande pour manipuler, calculer, trier et filtrer les données de transaction numériques stockées, de manière à générer des statistiques et à suggérer les événements qui doivent être regardés sur l'enregistrement de fonctionnement de répétition.

12. Système de surveillance selon la revendication 11,
dans lequel
les signaux de synchronisation sont des signaux qui correspondent au temps s'écoulant lorsque les enregistrements sont effectués.

13. Système de surveillance selon la revendication 11,
dans lequel
le moyen d'exploration de lumière (16, 126, 127, 128, 129) est une caméra de télévision.

14. Système de surveillance selon la revendication 13,
dans lequel
le premier moyen d'enregistrement (22, 23, 26, 134, 135, 136, 137) est un magnétoscope.

15. Système de surveillance selon la revendication 11,
dans lequel
les signaux de synchronisation sont des signaux de séquence.

16. Procédé d'enregistrement asynchrone d'événements incluant un enregistrement vidéo et un enregistrement de transaction, comprenant les étapes consistant à :
a) générer des trames de signaux vidéo correspondant aux événements dans un poste d'opérations ;
b) générer des signaux numériques dans le poste de fonctionnement pour représenter des événements de transaction ;
c) générer des signaux de synchronisation ;
d) stocker les signaux vidéo et les signaux de synchronisation sur un premier support ;
e) stocker les signaux numériques et les signaux de synchronisation sur un second support ;
f) restituer les signaux vidéo stockés, les signaux numériques stockés et les signaux de synchronisation stockés correspondants ;
g) synchroniser les signaux vidéo avec les signaux numériques en utilisant les signaux de synchronisation restitués ;
h) générer un signal vidéo composite, ce signal vidéo composite incluant des signaux représentant des affichages alphanumériques qui correspondent à des événements de transaction voulus, ces affichages alphanumériques étant superposés sur le signal vidéo des événements de fonctionnement voulus ; et
i) afficher le signal vidéo composite.
